**Europäisches Patentamt**

**European Patent Office**

**Office européen des brevets**

(19)

(11) Veröffentlichungsnummer: **0 128 276**
**B1**

(12)

# EUROPÄISCHE PATENTSCHRIFT

(45) Veröffentlichungstag der Patentschrift:
10.06.87

(51) Int. Cl.⁴: **F 16 D 65/02**

(21) Anmeldenummer: **84103025.7**

(22) Anmeldetag: **20.03.84**

(54) **Bremsbelagträger für Teilbelag-Scheibenbremsen.**

(30) Priorität: **17.05.83 DE 3317913**

(43) Veröffentlichungstag der Anmeldung:
**19.12.84 Patentblatt 84/51**

(45) Bekanntmachung des Hinweises auf die Patenterteilung:
**10.06.87 Patentblatt 87/24**

(84) Benannte Vertragsstaaten:
**AT DE FR GB IT**

(56) Entgegenhaltungen:
**DE-A-3 231 279**
**DE-B-1 185 487**
**DE-B-2 242 877**
**DE-C-2 451 392**
**DE-U-1 936 361**
**DE-U-7 009 333**
**DE-U-7 837 260**
**US-A-2 451 326**

(73) Patentinhaber: **KNORR- BREMSE AG, Moosacher Strasse 80 Postfach 401060, D-8000 München 40 (DE)**

(72) Erfinder: **Saumweber, Eckart, Dr., Mühlstrasse 15, D-8035 Gauting (DE)**
Erfinder: **Schmitt, Otto, Richard- Strasse 4, D-8000 München 50 (DE)**

## Beschreibung

Die Erfindung bezieht sich auf Bremsbelagträger für Teilbelag-Scheibenbremsen, insbesondere von Schienenfahrzeugen, mit einer Grundplatte, an welcher einerseits unter Zwischenlage eines elastisch verformbaren, Einprägungen aufweisenden Zwischenbleches wenigstens ein Belagträgerblech eines gegebenenfalls aufgegliederten Reibbelages gehalten ist und welche andererseits gegebenenfalls lösbar mit einem Trag- oder Betätigungselement der Bremszuspannvorrichtung verbunden ist.

Ein derartiger Bremsbelagträger ist aus der DE-B-1 185 487 bekannt. Hierbei ist ein verformbares Zwischenblech zwischen einem Bremszylinderkolben und ein Belagträgerblech eingeordnet. Das Zwischenblech weist außerhalb seines Anlagebereiches am Bremszylinderkolben beidseitig jeweils zwei Einprägungen auf; die Einprägungen liegen somit nicht im direkten Kraftflußweg der Bremszuspannkraft vom Bremszylinderkolben zum Belagträgerblech.

Die DE-B-2 242 877 zeigt einen Bremsbelagträger, bei welchem ein Belagträgerblech selbst nur bremskolbenseitig mit in einem regelmäßigen Muster angeordneten Einprägungen versehen ist. Es ist kein elastisch verformbares Zwischenblech vorhanden.

Bei einem weiteren, aus der DE-C-24 51 392 bekanntem Bremsbelagträger ist ein Paket von gleichartigen, lamellenartigen Zwischenblechen vorgesehen, welche gleichmäßig eben sind und sich vollflächig gegenseitig berühren und miteinander verbunden sind. Dieses Zwischenblechpaket ist in geeigneter Weise, insbesondere Verkleben, mit der Grundplatte und dem Belagträgerblech fest verbunden. Das der Geräuschminderung der Scheibenbremse dienende Zwischenblechpaket weist infolge der Vielzahl der Bleche eine beachtliche Stärke auf, um welche bei ansonsten vorgegebenen Scheibenbremsabmessungen die Verschleißstärke des Bremsbelages gemindert werden muß. Es sind also nur verminderte Betriebszeiten der Scheibenbremse zwischen Belagwechseln möglich. Weiterhin erfordert das Zwischenblechpaket mit seinen Verklebungen zwischen den Lamellen und zur Grundplatte sowie zum Belagträgerblech einen nicht unbeachtlichen Aufwand, wobei die Klebestellen zudem überhitzungsempfindlich sind.

Aus der US-A-2 451 326 sind weiterhin Bremsbelagträger bekannt, bei welchen mit Ausnahme der Anordnung einer Gummiplatte anstelle des Zwischenbleches die eingangs erwähnten Merkmale vorliegen. Der Reibbelag ist hierbei in einzelne Reibbelagklötze aufgegliedert, welche einzeln oder zu mehreren auf Belagträgerblechen angeordnet sind, die ihrerseits unter Zwischenlage der Gummiplatte gegenseitig beweglich an der Grundplatte gehaltert sind. Hierbei besteht die Gefahr, daß die Gummiplatte bei lang anhaltenden Bremsungen durch Wärmeeinwirkung beschädigt wird.

Mit der nicht vorveröffentlichten deutschen Patentanmeldung P 32 31 279 (DE-A-3 231 279) wurden Bremsbelagträger vorgeschlagen, welche in den hier wesentlichen Merkmalen der vorstehend erwähnten US-A 2 451 326 entsprechen, bei welchen jedoch anstelle der Gummiplatte ein Zwischenblech oder mehrere aufeinanderliegende Zwischenbleche vorgesehen sind, wobei das Zwischenblech bzw. die Zwischenbleche in Art eines Wellbleches gewellt ausgeführt ist bzw. sind. Infolge dieser Wellung weisen die Zwischenbleche hinsichtlich ihrer Elastizität eine bevorzugte Richtung auf, wodurch unter Umständen keine völlig gleichmäßige Anpressung der Reibbelag-Klötze an die Bremsscheibe und auch keine optimale Geräuschdämpfung erzielbar ist.

Der Erfindung liegt die Aufgabe zugrunde, einen Bremsbelagträger der eingangs genannten Art zu schaffen, welcher bei billigem, einfachem Aufbau hitzebeständig ist, eine gleichmäßige Anpressung des gegebenenfalls in Einzelklötze aufgegliederten Reibbelages an die Bremsscheibe gewährleistet und welcher zudem eine optimale Dämpfung bzw. Unterdrückung von Geräuschen ergibt.

Diese Aufgabe wird nach der Erfindung dadurch gelöst, daß das Zwischenblech aus der Blechebene vorspringende Verformungen aufweist, die über den gesamten Bereich der zwischen Belagträgerblech und Grundplatte miteinander korrespondierenden Flächen in annähernd gleichem Abstand zueinander angeordnet und derart ausgebildet sind, daß sie an Grundplatte und Belagträgerblech zu deren gegenseitiger Abstützung elastisch verformbar anliegen.

Die Verformungen können nach der weiteren Erfindung vorteilhaft einen kreisförmigen Rand aufweisen und kugelabschnittartig, pyramiden- oder kegelstumpfwandartig geformt sind, sie können durch Fehlen ihrer Böden geöffnet sein, wobei die Böden durch Stanzen, Aufbohren, Abschleifen bzw. -fräsen oder Aufreißen geöffnet sein können, und das Zwischenblech kann Ausnehmungen oder Öffnungen zum Durchtritt von die Grundplatte mit dem Reibbelag verbindenden Halteorganen aufweisen.

In den Zeichnugnen sind Ausführungsbeispiele für nach der Erfindung ausgebildete Bremsbelagträger dargestellt und zwar zeigt

Fig.1 einen Schnitt durch einen Bremsbelagträger,

Fig.2 einen Schnitt durch eine geänderte Ausführungsform des Bremsbelagträgers,

Fig.3 eine Aufsicht auf ein Zwischenblech und

Fig.4 eine Seitenansicht des nach Linie I-I aufgeschnittenen Zwischenbleches gemäß Fig.3.

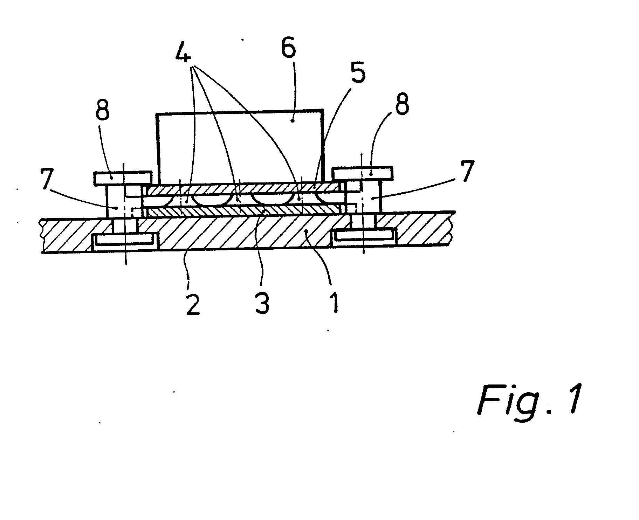

Der Bremsbelagträger gemäß Fig.1 weist eine Platte auf, welche zur einen Seite 2 mit einem nicht dargestellten Trag- oder Betätigungselement einer ebenfalls nicht dargestellten Bremszuspannvorrichtung zusammenwirkt. Andererseits liegt auf der Grundplatte 1 ein Zwischenblech 3 auf, welches mit noch zu beschreibenden Eindellungen versehen ist, welche auf der der Grundplatte 1 abgewandten Seite aus der Zwischenblech-Ebene vorspringende Ausbeulungen 4 bilden.

Auf den Ausbeulungen 4 liegt ein Belagträgerblech 5 auf, welches andererseits einen klotzartigen Reibbelag 6 trägt. Seitlich des Reibbelages 6 sind an der Grundplatte 1 Bolzen 7 gehalten, deren Schäfte im Randbereich des Zwischenbleches 3 und des Belagträgerbleches 5 vorgesehene, etwa halbkreisförmige Ausnehmungen 8 bzw. 9 durchragen und deren Köpfe 8 seitlich über den Reibbelag 6 vorstehende Abschnitte des Belagträgerbleches 5 übergreifen. Zur einen oder zu beiden Seiten des Reibbelages 6 können sich entsprechende Reibbelag-Anordnungen wiederholen; die Anordnung entspricht dann mit Ausnahme des besonderen Zwischenbleches 3 in ihrer Grundkonzeption dem Bremsbelagträger nach Fig. 6 und 7 gemäß der bereits erwähnten US-A-2 451 326. Durch die Auflage auf den Ausbeulungen 4, welche begrenzt elastisch verformbar sind, ist der Reibbelag-Klotz 6 elastisch und eigenbeweglich gegen die Grundplatte 1 abgestützt, wobei die der Halterung des Reibbelag-Klotzes 6 an der Grundplatte 1 dienenden Bolzen 7 diese elastisch-bewegliche Abstützung nicht behindern. Da bei dem beschriebenen Aufbau die einzelnen Reibbelag-Klötze des Bremsbelagträgers sich in ihren Bewegungen in keiner Weise gegenseitig behindern, ist eine völlig gleichmäßige Anpressung der Reibbelag-Klötze an die nicht dargestellte Bremsscheibe möglich. Diese Anordnung ist besonders zur Verwendung von Reibbelag-Klötzen aus Sintermetall geeignet, welche nahe ihrer Reibfläche zur Bremsscheibe leicht ausbrechen, die gleichmäßige Beanspruchung und das Vermeiden gegenseitiger Anlagen mindert diese Ausbruchsgefahr. Zusätzlich kann zum Vermeiden der Ausbrechungen jeder einzelne Reibbelag-Klotz an seinem Umfang von einem nicht dargestellten Siebblech eingefaßt sein, welches mit dem Reibbelag verschleißt oder sich entsprechend dem Reibbelagverschleiß an der der Grundplatte 1 abgewandten Seite allmählich umbörtelt und einrollt.

Aus Prüfstandsversuchen mit der vorstehend beschriebenen Ausführungsform entsprechenden Bremsbelagträgern ist entnehmbar, daß bei geeigneter, noch genauer zu beschreibender Gestaltung der Ausbeulungen 4 sehr ruhig, nahezu geräuschfrei verlaufende Bremsungen erzielbar sind, wobei an der Bremsscheibe keinerlei "Feuern" auftritt, die Reibbeläge also völlig gleichmäßig belastet werden und hohe Betriebszeiten für die Bremsbeläge erzielbar sind. Da zudem das Zwischenblech 3 mit seinen Ausbeulungen 4 nur eine geringe Bauhöhe beansprucht, sind dicke Reibbeläge mit großem Verschleißvolumen verwendbar.

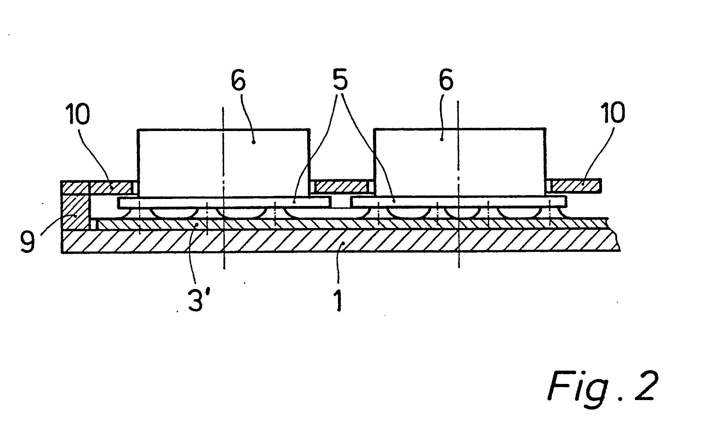

Beim Bremsbelagträger nach Fig. 2 liegen auf einem durchgehenden Zwischenblech 3' mehrere Belagträgerbleche 5 mit jeweils einen Reibbelag-Klotz 6 auf. Die seitlich über die Reibbelag-Klötze 6 vorstehenden Ränder der Belagträgerbleche 5 sind von einem über einen Abstandshalter 9 mit der Grundplatte 1 verbundenen Lochblech 10 übergriffen, wobei die Reibbelag-Klötze 6 durch die Löcher des Lochbleches 10 ragen. Ansonsten entspricht der Bremsbelagträger nach der Fig. 2 demjenigen nach Fig. 1 und weist auch dessen Funktion und Vorteile auf.

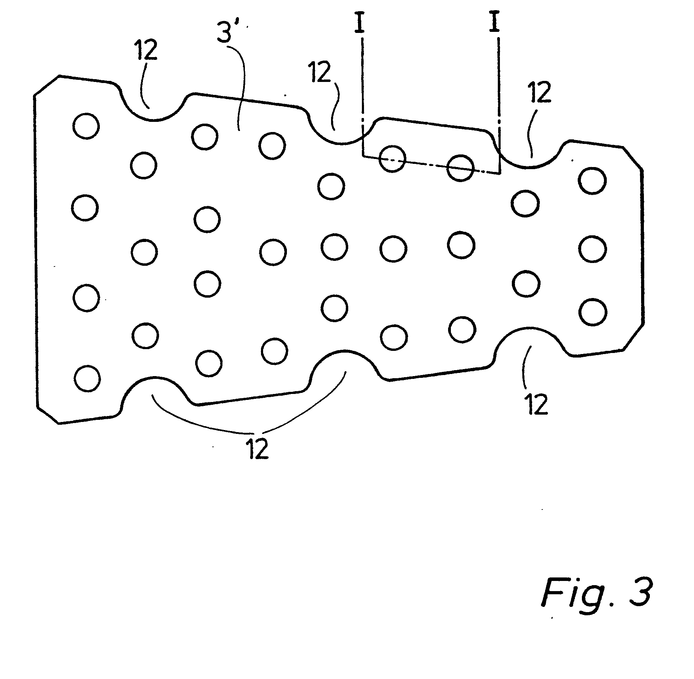

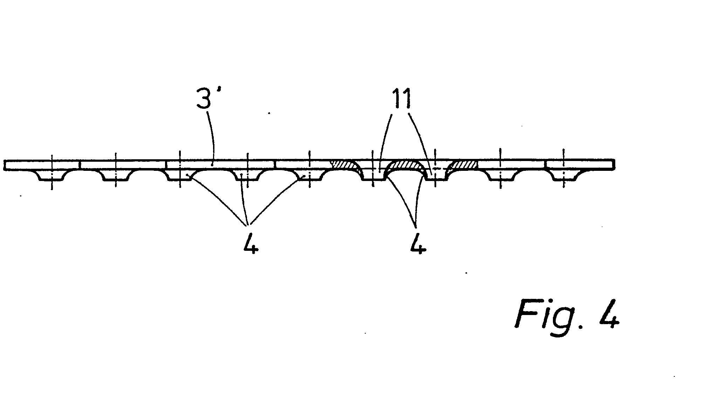

Es ist selbstverständlich möglich, entsprechend zu Fig. 2 auch bei einer Prinzipanordnung nach Fig. 1 nur ein Zwischenblech 3' vorzusehen, auf welchem mehrere Reibbelag-Klötze 6 mit ihren Belagträgerblechen 5 aufliegen. Ein hierzu geeignetes Zwischenblech 3' ist in Fig. 3 in Aufsicht und in Fig. 4 teilweise aufgeschnitten in Seitenansicht dargestellt.

Das Zwischenblech 3' gemäß Fig. 3 und 4 ist in einem annähernd regelmäßigen Muster mit Eindellungen 11 versehen, derart, daß die Eindellungen 11 in etwa gleichen Abstand zueinander aufweisen. Die durch Eindrücken eines kugelabschnittartige Vorsprünge aufweisenden Werkzeuges auf die Oberfläche des Zwischenbleches 3' geformten Eindellungen 11 weisen einen kreisförmigen Rand auf und sind selbst kugelabschnittartig bzw. kegelstumpfwandartig geformt; auf der dem nicht dargestellten, vorstehend erwähnten Werkzeug abgewandten Seite bilden die Eindellungen 11 Ausbeulungen 4. Durch Stanzen, Aufbohren, Abschleifen oder Abfräsen sind die Dellenböden entfernt, so daß die Eindellungen 11 geöffnet sind und das Zwischenblech 3 letztlich eine gewisse Ähnlichkeit zu einem Reibeisen aufweist.

Die Elastizität des Zwischenbleches 3' ist durch die Anzahl bzw. den gegenseitigen Abstand der Eindellungen 11, durch die Größe dieser Eindellungen sowohl hinsichtlich ihres Durchmessers wie ihrer Tiefe, durch die Größe der Öffnungen der Eindellungen 11 sowie die Stärke und das Material des Zwischenbleches 3' bestimmbar, derart, daß optimale Eigenschaften des Bremsbelagträgers erreicht werden. Die aus Fig. 3 ersichtlichen, etwa halbrunden Ausnehmungen 12 an den beiden Längsseiten des Zwischenbleches 3' dienen dem Durchtritt von den Bolzen 7 nach Fig. 1 entsprechenden, sich von der Grundplatte zum Belagträgerblech erstreckenden, in Fig. 3 nicht gezeigten Halteelementen.

Die Eindellungen können natürlich auch andersartig als vorbeschrieben ausgebildet sein, insbesondere können die Eindellungen derart geformt sein, daß sie pyramidenförmige Ausbeulungen mit beliebiger, beispielsweise sternförmiger Grundfläche bilden. Die Eindellungen können auch derart ausgebildet sein, daß sie andererseits des Zwischenbleches kreuzförmige, sickenartige Erhebungen bilden. Es ist auch möglich, im Zwischenblech durch Ausstanzen ein- oder beidseitig mit dem Zwischenblech verbunden bleibende Zungen zu bilden, die aus der Blechebene heraus verformt werden. Im Zwischenblech können auch zickzack-verlaufende Ausstanzungen vorgesehen werden, die in geeigneter Weise aufgebogen oder verschränkt werden. In jedem Falle ist anzustreben, daß in einem Arbeitsvorgang das Ausbilden und Verformen des Zwischenbleches selbst und der Verformungen bzw. Eindellungen erfolgen kann. Das Zwischenblech kann mit dem Belagträgerblech oder der Grundplatte zugewandten, vorspringenden Verformungen eingelegt werden.

Der erfindungsgemäße Bremsbelagträger ist besonders vorteilhaft zur Verwendung mit in Aufsicht kreisförmigen Reibbelägen aus Sintermetall geeignet, hierbei weist das Zwischenblech eine Kreisform auf, welche derjenigen des Belagträgerbleches entspricht, wobei zentral durch das Zwischenblech ein Haltebolzen für den Reibbelag von der Grundplatte zum Belagträgerblech greifen kann.

## Bezugszeichenliste

1 Grundplatte
2 Seite
3,3' Zwischenblech
4 Ausbeulung
5 Belagträgerblech
6 Reibbelag
7 Bolzen
8 Kopf
9 Abstandshalter
10 Lochblech
11 Eindellung
12 Ausnehmung

## Patentansprüche

1. Bremsbelagträger für Teilbelag-Scheibenbremsen, insbesondere von Schienenfahrzeugen, mit einer Grundplatte (1), an welcher einerseits unter Zwischenlage eines elastisch verformbaren, Einprägungen aufweisenden Zwischenbleches (3, 3') wenigstens ein Belagträgerblech (5) eines gegebenenfalls aufgegliederten Reibbelages (6) gehalten ist und welche andererseits gegebenenfalls lösbar mit einem Trag- oder Betätigungselement der Bremszuspannvorrichtung verbunden ist, dadurch gekennzeichnet, daß das Zwischenblech (3, 3') aus der Blechebene vorspringende Verformungen (11) aufweist, die über den gesamten Bereich der zwischen Belagträgerblech (5) und Grundplatte (1) miteinander korrespondierenden Flächen in annähernd gleichem Abstand zueinander angeordnet und derart ausgebildet sind, daß sie an Grundplatte (1) und Belagträgerblech (5) zu deren gegenseitiger Abstützung elastisch verformbar anliegen.

2. Bremsbelagträger nach Anspruch 1, dadurch gekennzeichnet, daß die Verformungen (11) einen kreisförmigen Rand aufweisen.

3. Bremsbelagträger nach Anspruch 2, dadurch gekennzeichnet, daß die dellenartigen Verformungen (11) kugelabschnittartig geformt sind.

4. Bremsbelagträger nach Anspruch 1 oder 2, dadurch gekennzeichnet, daß die dellenartigen Verformungen (11) pyramiden- oder kegelstumpfwandartig geformt sind.

5. Bremsbelagträger nach Anspruch 1, 2, 3 oder 4, dadurch gekennzeichnet, daß die dellartigen Verformungen (11) durch Fehlen ihrer Böden geöffnet sind.

6. Bremsbelagträger nach Anspruch 5, dadurch gekennzeichnet, daß die Verformungen (11) durch Entfernen ihrer Böden durch Stanzen, Aufbohren, Abschleifen bzw. -fräsen oder Aufreißen geöffnet sind.

7. Bremsbelagträger nach Anspruch 1, dadurch gekennzeichnet, daß das Zwischenblech teilweise ausgestanzte und aus seiner Ebene verformte Zungen aufweist.

8. Bremsbelagträger nach Anspruch 1, dadurch gekennzeichnet, daß das Zwischenblech (3, 3') ausnehmungen (12) oder Öffnungen zum Durchtritt von die Grundplatte (1) mit dem Reibbelag (6) verbindenden Halteorganen (Bolzen 7) aufweist.

## Claims

1. Brake pad carrier for caliper disc brakes, in particular for rail vehicles, having a base plate (1) on which on the one hand there is held at least one pad carrier plate (5) for a friction pad (6) which is subdivided if necessary, with the interpositioning of a resiliently deformable intermediate plate (3, 3') having impressions, and which base plate (1) is on the other hand detachably connected if necessary to a carrier- or actuation- element of the brake application device, characterised in that the intermediate plate (3, 3') has deformations (11) which project out of the plane of the plate approximately equidistant from one another, are arranged over the entire area of the surfaces corresponding to each other between the pad carrier plate (5) and the base plate (1), and are formed in such a way that they abut the base plate (1) and the pad carrier plate (5) in resiliently deformable manner for their mutual support.

2. Brake pad carrier according to claim 1, characterised in that the deformations (11) have a circular edge.

3. Brake pad carrier according to claim 2, characterised in that the depression-like deformations (11) are shaped like spherical segments

4. Brake pad carrier according to claim 1 or 2, characterised in that the depression-like deformations (11) are shaped like pyramid or truncated cone walls.

5. Brake pad carrier according to claim 1, 2, 3 or 4, characterised in that the depression-like deformations (11) are open by their bases being omitted.

6. Brake pad carrier according to claim 5, characterised in that the deformations (11) are opened by their bases being removed either by stamping, drilling, grinding or milling, or shearing.

7. Brake pad carrier according to claim 1, characterised in that the intermediate plate has partially stamped-out tongues which are deformed out of its plane.

8. Brake pad carrier according to claim 1, characterised in that the intermediate plate (3, 3') has recesses (12) or apertures for the passage of retaining elements (pins 7) joining the base plate (1) to the friction pad (6).

**Revendications**

1. Support de garniture de frein pour des freins à disques à garnitures partielles, en particulier de véhicules sur rails, avec une plaque de base (1) à laquelle est reliée, d'une part, avec interposition d'une tôle intermédiaire (3, 3') élastiquement déformable et comportant des empreintes, au moins une tôle de support de garnitures (5) d'une garniture de friction (6) éventuellement subdivisée, et qui, par ailleurs, est reliée, éventuellement de façon détachable, à un élément de support ou de manoeuvre du dispositif de serrage du frein, caractérisé par le fait que la tôle intermédiaire (3, 3') comporte, en saillie sur le plan de la tôle, des déformations (11) qui sont réparties à peu près à égale distance entre elles sur la totalité de la zone des surfaces qui se correspondent entre la tôle de support de garniture (5) et la plaque de base (1) et qui sont conformées de telle façon qu'elles portent, avec possibilité de déformation élastique, contre la plaque de base (1) et la tôle de support de garniture (5), en vue de l'appui mutuel entre ces dernières.

2. Support de garniture de frein selon la revendication 1, caractérisé par le fait que les déformations (1) présentent un bord de forme circulaire.

3. Support de garniture de frein selon la revendication 2, caractérisé par le fait que les déformations (11) sont conformées à la manière de sections sphériques.

4. Support de garniture de frein selon la revendication 1 ou 2, caractérisé par le fait que les déformations (11) sont conformées à la manière de troncs de pyramides ou de troncs de cônes.

5. Support de garniture de frein selon les revendications 1, 2, 3 ou 4, caractérisé par le fait que les déformations sont ouvertes par l'absence de leurs fonds.

6. Support de garniture de frein selon la revendication 5, caractérisé par le fait que les déformations (11) sont ouvertes par enlèvement de leurs fonds par découpage, par perçage, par meulage ou par fraisage, ou par arrachement.

7. Support de garniture de frein selon la revendication 1, caractérisé par le fait que la tôle intermédiaire est partiellement découpée par poinçonnage et comporte des languettes déformées à partir de son plan.

8. Support de garniture de frein selon la revendication 1, caractérisé par le fait que la tôle intermédiaire (3, 3') comporte des dégagements (12) ou des ouvertures pour le passage d'organes de maintien (boulons 7) qui relient la plaque de base (1) avec la garniture de friction (6).

*Fig . 1*

Fig . 2

*Fig. 3*

Fig. 4